Europäisches Patentamt

European Patent Office

Office européen des brevets

(19)

(11) Numéro de publication: **0 083 275**
**B1**

(12) **FASCICULE DE BREVET EUROPEEN**

(45) Date de publication du fascicule du brevet:
04.09.85

(51) Int. Cl.⁴: **C 01 F 7/22,** C 01 F 7/30

(21) Numéro de dépôt: **82402330.3**

(22) Date de dépôt: **17.12.82**

(54) Procédé de préparation d'alumines de haute pureté à partir de solutions impures de chlorure d'aluminium.

(30) Priorité: **30.12.81 FR 8124486**

(43) Date de publication de la demande:
**06.07.83 Bulletin 83/27**

(45) Mention de la délivrance du brevet:
**04.09.85 Bulletin 85/36**

(84) Etats contractants désignés:
**AT BE CH DE FR GB IT LI LU NL SE**

(56) Documents cités:
**FR - A - 1 419 879**
**GB - A - 205 563**
**US - A - 3 652 232**
**US - A - 4 259 311**

(73) Titulaire: **CRICERAM, 23, rue Balzac, F-75008 Paris (FR)**

(72) Inventeur: **Gurtner, Bernard, 5 Boulevard Auguste
Sembat, F-38000 Grenoble (FR)**
Inventeur: **Barral, Robert, 9, rue des Fleurs Les Hameaux
Serezin-du-rhône, F-69360 Saint-Symphorien d'Ozon
(FR)**
Inventeur: **Bachelard, Roland, 99, Grande-rue de la
Guillotière, F-69007 Lyon (FR)**

(74) Mandataire: **Pascaud, Claude et al, PECHINEY 28, rue de
Bonnel, F-69433 Lyon Cedex 3 (FR)**

EP 0 083 275 B1

ACTORUM AG

## Description

La présente invention concerne un nouveau procédé permettant de préparer des alumines de haute pureté à partir de solutions impures de chlorure d'aluminium.

Les alumines de haute pureté qui sont visées ont une pureté supérieure à 99,9% en $Al_2O_3$. Leurs applications sont nombreuses aujourd'hui. Parmi elles citons, dans le domaine des céramiques techniques, la fabrication des alumines tranlucides, les compositions luminescentes pour les tubes fluorescents, les biocéramiques et le polissage des métaux. D'autre part, elles constituent la matière première pour la fabrication des monocristaux selon la technique de cristallisation Verneuil.

Différents procédés permettant d'avoir accès aux alumines de haute pureté. Certains d'entre eux utilisent l'aluminium comme produit de départ. Celui-ci est transformé en sel d'acide organique ou en alcoolate, qui est ensuite hydrolysé ou décomposé thermiquement pour conduire finalement à l'alumine. En dépit de la possibilité de recycler l'alcool dans certains cas, le coût de cette alumine est très élevé du fait de l'obligation d'engager de l'aluminium métallique.

D'autres voies partent de l'hydroxyde d'aluminium impur produit en grande quantité dans l'industrie de l'aluminium à partir des minerais. Elles consistent à passer par l'intermédiaire d'un sel minéral dont la cristallisation permet l'élimination de la majeure partie des impuretés. Le produit ainsi obtenu est ensuite décomposé thermiquement pour former l'alumine pure. Des procédés selon ce principe sont basés sur la cristallisation de l'alun d'ammonium qui est formé à partir d'hydroxyde d'aluminium, d'acide sulfurique et d'ammoniaque. Mais la mise en œuvre de ce sel présente plusieurs désavantages. En premier lieu, il conduit à une consommation très élevée de réactifs puisque la molécule $NH_4Al (SO_4)_2, 12 H_2O$ ne contient pas plus de 11% d'alumine et que les produits gazeux de la décomposition ne sont pas récupérables. D'autre part, l'alun d'ammonium présente la particularité de fondre vers 85°C dans son eau de cristallisation. Il en résulte certaines difficultés technologiques à réaliser économiquement le traitement thermique de ce produit encore qu'un procédé nettement plus performant fasse l'objet de la demande FR-A N 2486058.

Comparativement, il semble plus intéressant à priori de passer par la voie du chlorure d'aluminium. En effet, à partir de solutions de chlorure d'aluminium, il est possible de cristalliser l'hexahydrate $AlCl_3, 6 H_2O$ dont la teneur en alumine s'élève à 21% et qui ne fond pas dans son eau de cristallisation. En outre, la pyrohydrolyse de ce sel libère un mélange d'acide chlorhydrique et d'eau qui peut éventuellement être récupéré.

Les sources de chlorure d'aluminium sont d'ailleurs assez nombreuses. Certaines sont des solutions de récupération de l'attaque chlorhydrique de l'aluminium telle qu'elle est pratiquée dans les procédés dits d'etching. Ces jus sont de bonne pureté quoique parfois assez dilués. L'attaque de certains minerais comme les argiles permet également de disposer de solutions impures de chlorures dont l'épuration a été étudiée. Enfin, comme pour l'alun, il est facile de dissoudre du trihydrate d'alumine dans des solutions d'acide chlorhydrique pour avoir du chlorure d'aluminium en solution.

Les moyens de transformer la solution de chlorure d'aluminium en alumine sont nombreux.

Certains consistent en une pyrohydrolyse directe de la solution dans une flamme. La réaction est extrêmement rapide mais la déchlorhydratation est rarement complète. Aussi, l'alumine recueillie contient toujours des proportions relativement importantes de chlore résiduaire. Pour en réduire la teneur, on ne peut qu'augmenter la température de flamme, ce qui, corrélativement, fait grossir les cristaux et conduit inévitablement à des poudres de faible aire spécifique. En outre, la brièveté du traitement, si elle est favorable à la production des installations, est préjudiciable à l'homogénéité du produit.

L'autre catégorie de procédés regroupe ceux qui comportent le passage, à un stade intermédiaire, par le chlorure d'aluminium hexahydraté cristallisé. Cette étape permet en principe de séparer les impuretés et notamment le fer dont le chlorure peut rester solubilisé dans les eaux mères. Après lavage par une solution pure d'acide, les cristaux sont traités thermiquement. Il s'ensuit une hydrolyse par l'eau de cristallisation qui entraîne la déchlorhydratation partielle du produit. La pyrohydrolyse complète nécessite de porter finalement le produit à température assez élevée.

On observe là encore qu'il n'a pas été possible jusqu'à présent de préparer à l'échelle industrielle par cette voie des alumines de transition à grande surface spécifique et ne contenant pas plus de 0,1% de chlore résiduaire. Or, pour certaines applications des alumines de haute pureté, il est nécessaire de disposer de produits présentant des aires spécifiques supérieures à 100 $m^2g^{-1}$. C'est le cas pour le polissage, la cristallisation au chalumeau Verneuil, l'emploi comme charge notamment dans les condensateurs papiers, etc.

En outre, pour les céramiques techniques obtenues par frittage de corindon, on recherche toujours des poudres présentant la plus grande homogénéité possible de leur taille de particules. Pour parvenir à cette régularité, il est préférable de disposer à un stade intermédiaire d'un produit homogène, cristallisé en fines particules élémentaires dont on assurera la transformation en corindon par un protocole de calcination bien défini.

Il existe donc un besoin de disposer d'un procédé industriel de préparation d'alumines de haute pureté à partir de solutions de chlorure d'aluminium offrant la possibilité d'obtenir des alumines intermédiaires caractérisées par une grande surface spécifique et un taux de Cl résiduel ne dépassant pas 0,1%.

La présente invention répond à un tel besoin et fournit un procédé de préparation d'alumine de haute pureté à partir de solutions impures de chlorure d'aluminium qui comprend les étapes suivantes:

— la cristallisation du chlorure d'aluminium hexahydraté en cristaux de diamètre compris entre 400 et 4000 µm, en présence d'acide chlorhydrique,

— la séparation de façon connue par filtration-arrosage des cristaux d'AlCl$_3$, CH$_2$O et leur lavage par de l'HCl pur,

— la pyrohydrolyse des cristaux lavés entre 700 et 1300°C, au cours de laquelle on force un gaz à traverser une couche solide d'AlCl$_3$, CH$_2$O de façon à extraire les produits gazeux de la réaction sans entraînement du solide par le gaz.

Ce procédé conduit à une alumine à moins de 0,1% de Cl résiduel, même pour une surface spécifique supérierue à 100 m$^2$g$^{-1}$, et permet la réutilisation de la totalité de l'HCl grâce à une récupération sous forme concentrée.

Une description plus détaillée des diverses étapes permettra de mieux comprendre l'invention.

Pour réaliser la cristallisation envisagée, on part de solutions concentrées contenant entre 8 et 33% en poids et de préférence entre 25 et 32% en poids de AlCl$_3$.

La cristallisation continue de l'hydrate est obtenue par injection continue d'acide chlorhydrique gazeux et de la solution initiale de chlorure d'aluminium dans une suspension agitée de cristaux de chlorure hexahydraté dans une solution plus ou moins épuisée comprenant entre 0,5 et 15% et de préférence entre 0,5 et 4% de AlCl$_3$.

Afin d'obtenir les gros cristaux recherchés et assurer un épuisement satisfaisant de la solution, il faut maintenir la concentration en HCl en solution dans la plage de 15 à 35% et de préférence de 29 à 34%.

La solubilité de AlCl$_3$ variant peu en fonction de la température, il est possible de travailler entre la température ambiante et 80°C. Il est toutefois particulièrement avantageux d'opérer entre 50 et 75°C car on bénéficie à l'intérieur de cette plage notamment d'une diminution de la fréquence de nucléation. Un autre avantage de travailler entre 50 et 75°C est que la concentration en HCl est automatiquement fixée par la saturation de la solution.

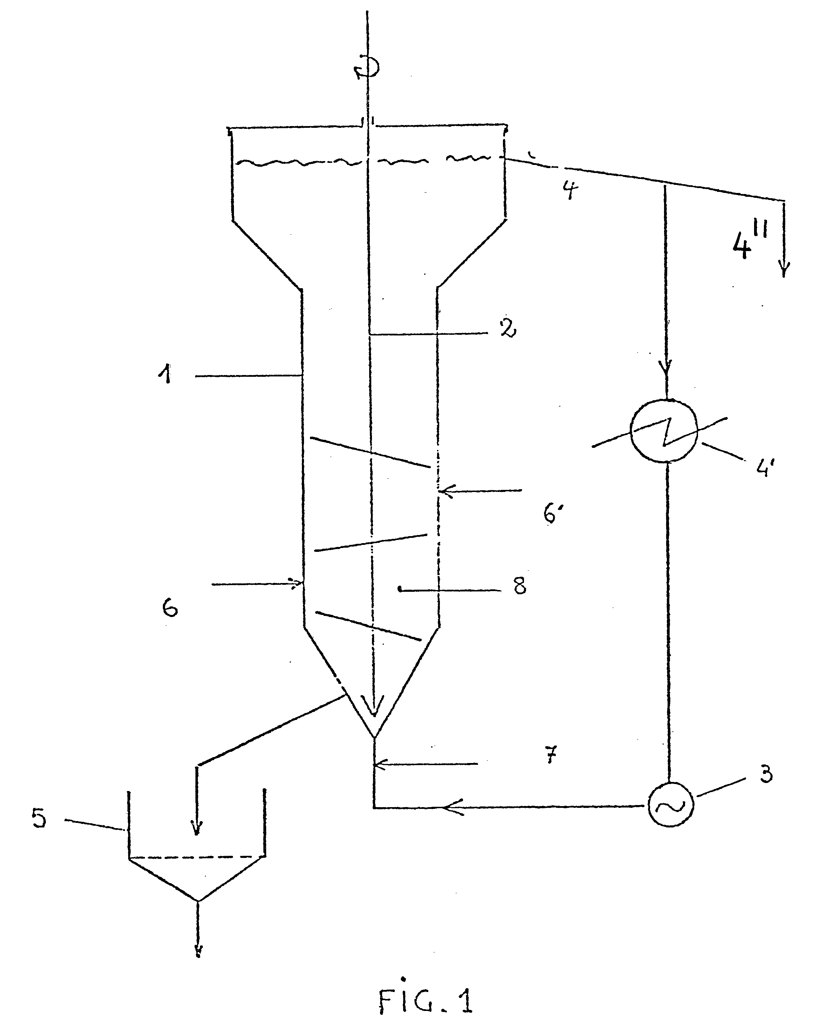

Un mode préféré de réalisation de la cristallisation consiste à travailler dans un lit fluidisé liquide-solide qui permet de recueillir en continu des cristaux de taille importante avec une productivité élevée et un épuisement satisfaisant. Un tel dispositif est représenté par le schéma de la fig. 1.

Le cristallisoir 1 est un cylindre à fond conique muni à sa partie supérieure d'un évasement destiné à réduire la vitesse ascensionnelle des liqueurs. La suspension de cristaux, 8, est continuellement maintenue en mouvement par l'action d'un agitateur 2. A la partie supérieure, les eaux mères sortant par 4 ne contenant que quelques particules fines passent à travers un échangeur 4' puis sont recyclées à l'aide d'une pompe de circulation 3. Une partie d'entre elles est éliminée et constitue la purge 4''.

Le soutirage des cristaux de grosse dimension s'effectue dans la partie conique et la bouillie est recueillie sur un filtre 5.

L'alimentation du réacteur s'effectue en plusieurs points 6, 6' à la base de la partie cylindrique pour le chlorure d'aluminium. L'acide chlorhydrique est injecté à la base du cône dans le circuit de recyclage des eaux mères 7.

L'obtention de gros cristaux est un moyen d'améliorer la pureté du chlorure. En effet, on le démontre aisément d'après les résultats obtenus à partir d'une solution impure préparée par attaque d'un hydrate d'alumine Bayer et cristallisée en cristaux de différentes tailles.

Les dosages des impuretés ramenés à Al$_2$O$_3$ donnent les résulats suivants:

| Impuretés en ppm* /Al$_2$O$_3$ | Al(OH)$_3$ de départ | Chlorure d'aluminium hexahydraté | | |
|---|---|---|---|---|
| | | $\varnothing \simeq 50$ µm | 1 - 2 mm | 2 - 3 mm |
| Ca | 250 | 40 | 21 | 15 |
| Fe | 200 | 15 | 5,4 | 3,2 |
| Ga | 88 | 3,3 | < 2 | < 2 |
| Mg | 3,5 | 2,7 | 2,1 | ≤ 2 |
| Mn | 1,9 | < 0,5 | < 0,5 | < 0,5 |
| Na | 1700 | 90 | 44 | ≤ 40 |
| Si | 65 | 20-30 | 13 | 11 |
| Ti | 12 | < 3 | < 3 | < 3 |

* ppm: parties en poids par million

Après séparation par filtration et essorage, les cristaux sont lavés par l'acide pur recyclé de la calcination en lit drainé.

Cette calcination en lit drainé est caractérisée par le fait que l'on force des gaz chauds à traverser une couche de cristaux de chlorure d'aluminium hexahydraté de manière que le passage desdits gaz à travers ladite couche ne provoque pas de mise en mouvement du solide bien que la vitesse des gaz soit supérieure à la vitesse minimum de fluidisation des cristaux.

Le gaz est forcé de traverser la couche de chlorure cristallisé par poussée ou par aspiration.

Divers modes de réalisation peuvent être envisagés, par exemple:

— le chlorure hydraté est disposé sur un support poreux et le gaz est forcé de le traverser de haut en bas,

— le chlorure hydraté est disposé en sandwich entre deux supports poreux et le gaz est forcé de le traverser latéralement ou bien de bas en haut.

Le procédé peut être réalisé de façon discontinue, dans ce cas la couche de chlorure est immobile, ou bien de façon continue, la couche de chlorure est alors animée d'un mouvement de glissement à vitesse contrôlée le long des parois du réacteur.

Selon un mode de réalisation préféré de l'invention, les calories nécessaires à la pyrohydrolyse du chlorure en alumine sont apportées par ledit gaz.

Le gaz forcé à travers la couche de chlorure hydraté peut être constitué par de l'air humide ou par des gaz de combustion d'un hydrocarbure mais l'invention n'est pas limitée à ce choix.

La température de pyrohydrolyse est généralement comprise entre 700 et 1300° C et entre 700 et 900° C lorsque l'on veut préparer des alumines de transition.

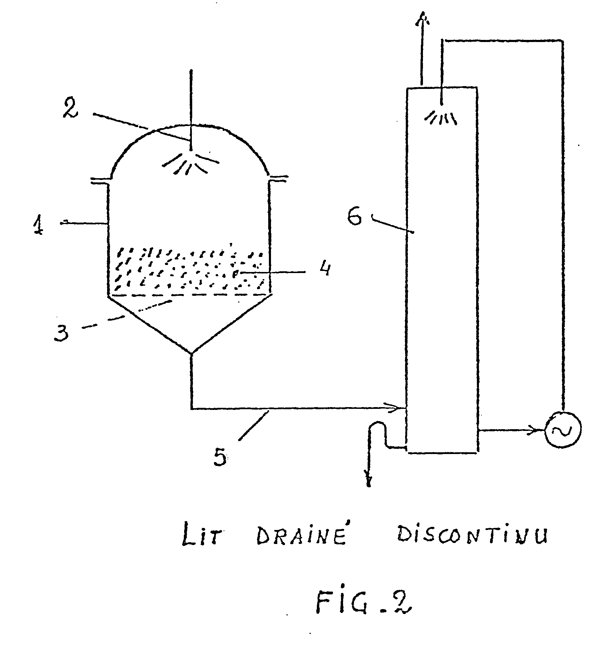

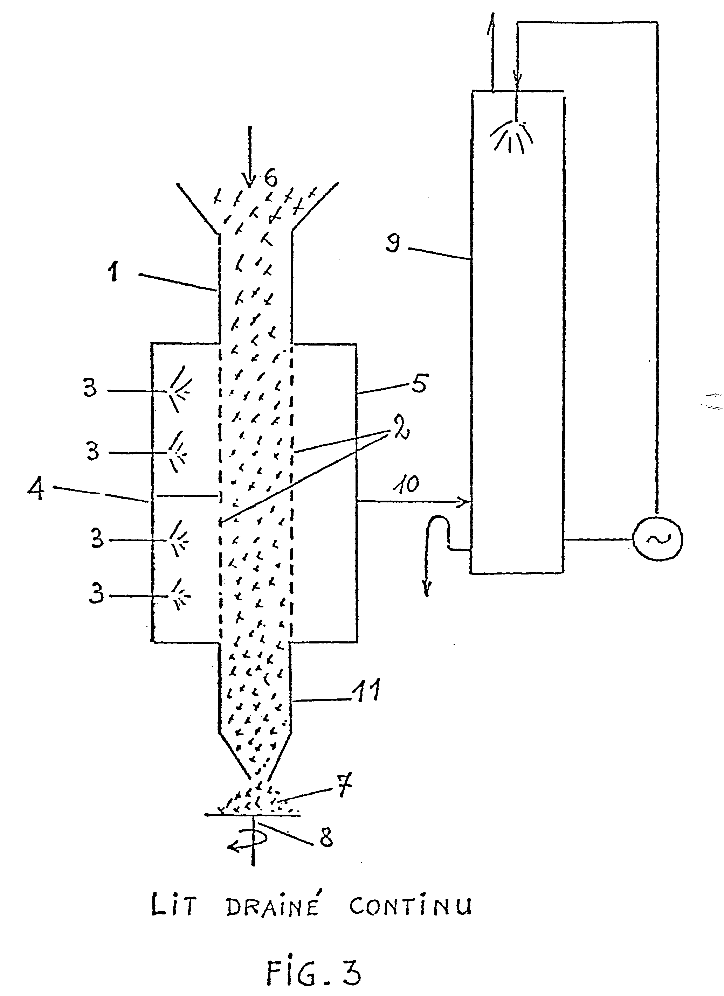

Les schémas des fig. 2 et 3 représentent les dispositifs continus et discontinus de calcination en lit drainé.

Le réacteur discontinu est une chambre cylindrique ou parallélépipédique 1 garnie intérieurement d'un réfractaire résistant à la corrosion par l'acide chlorhydrique. Le fond du réacteur est constitué par une sole poreuse 3 sur laquelle repose la couche 4 de cristaux à traiter. Un couvercle portant un brûleur 2 vient fermer la partie supérieure de manière étanche. Les gaz de combustion du brûleur traversent la couche de réactifs à forte vitesse en entraînant l'acide chlorhydrique libéré. Ils sont conduits par une gaine 5 jusqu'à une colonne d'absorption 6 qui permet la récupération de l'acide HCl. A la fin de l'opération, le brûleur est arrêté mais de l'air continue d'être envoyé au travers de la charge pour en faciliter le refroidissement. Lorsque celui-ci est suffisant, le couvrcle est retiré et l'alumine aspirée dans des conteneurs en aluminium. Une nouvelle charge de réactifs peut être mise en place.

Le procédé continu peut être réalisé dans un dispositif du type de celui illustré par la fig. 3. Il comporte dans sa partie centrale un conduit d'alimentation 1 des cristaux 6 de chlorure hexahydraté. Ceux-ci pénètrent ensuite dans la zone de pyrohydrolyse en glissant lentement entre des parois poreuses parallèles 2. La section du réacteur est donc généralement de forme rectangulaire. Par l'une des faces poreuses 2 sont injectés transversalement des gaz chauds produits, par exemple, par une série de brûleurs à gaz 3 disposés dans un caisson étanche 4. Différentes zones de chauffe peuvent être délimitées et mises en série correspondant à des niveaux de température différents. Les gaz chauds traversent à grande vitesse la couche des grains de chlorure et sortent par l'autre face poreuse 2 en entraînant l'eau et l'acide chlorhydrique produit dans un autre caisson étanche 5. Une gaine 10 en sort pour conduire les gaz vers un système d'absorption 9 de l'acide chlorhydrique. A l'extrémité des faces poreuses 2, le produit entièrement transformé en alumine passe par une zone de refroidissement 11 et sort du réacteur sous forme de petits granulés 7 qui sont extraits en continu à l'aide d'un distributeur de poudres 8.

En travaillant en lit drainé selon le procédé de l'invention on améliore les échange thermiques et les échanges de matière. Il en résulte une productivité élevée des installations.

Le procédé de la présente invention présente des avantages multiples : tout en conduisant à une productivité accrue, il permet l'obtention industrielle d'alumines de transition de haute pureté dont la teneur en Cl résiduaire est inférieure à 0,1% et l'aire spécifique dépasse 100 $m^2g^{-1}$.

Un autre avantage très important de l'invention réside dans le fait que les alumines de transition préparées selon le présent procédé sont très réactives vis-à-vis de la transformation en corindon. Ainsi, lorsque l'on calcine à 1150° C pendant 2 h une alumine gamma ex-alun classique d'une aire spécifique de 100 $m^2g^{-1}$, on obtient une poudre dont la surface spécifique est de 49 $m^2g^{-1}$ et le taux de corindon ne dépasse pas 52%. Dans les mêmes conditions, une alumine gamma ex-chlorure atteint 95% de $\alpha Al_2O_3$ pour une aire spécifique réduite à 6 $m^2g^{-1}$.

Enfin un avantage supplémentaire du procédé réside dans le recyclage complet de l'acide chlorhydrique pur produit à la calcination dans les étapes antérieures d'attaque et de cristallisation.

Les exemples suivants illustrent l'invention.

*Exemple 1 :*

*Préparation de la solution de chlorure d'aluminium*

Un trihydrate d'alumine obtenu selon le procédé Bayer contient les impuretés principales suivantes dont la teneur est exprimée par rapport à $Al_2O_3$.

| $Al(OH)_3$ de départ | Ca | Fe | Ga | Mg | Mn | Na | Si | Ti |
|---|---|---|---|---|---|---|---|---|
| ppm d'impuretés (/$Al_2O_3$) | 250 | 200 | 88 | 3,5 | 1,9 | 1700 | 65 | 12 |

Ce produit est introduit dans un réacteur ébonité chauffé extérieurement par une circulation de vapeur dans des tubes. L'hydrate est mélangé à de l'acide chlorhydrique en excès dont la concentration est voisine de 30%. On porte progressivement la suspension maintenue sous agitation jusqu'à 72°C. A partir de là, le chauffage est arrêté et la température évolue d'elle-même jusqu'à 110°C pour redescendre à 90°C au bout de 3½ h. La liqueur est alors filtrée pour séparer les insolubles et l'on recueille une solution claire titrant environ 30% en poids d'$AlCl_3$ et dont la température est encore de 60°C. Le pH de cette solution est égal à 1.

*Exemple 2:*

*Cristallisation du chlorure d'aluminium hexahydraté (exemple comparatif, non conforme à l'invention)*

Dans un réacteur en verre pyrex d'une capacité de 1 l et de 10 cm de diamètre, muni d'un agitateur type ancre, de dispositifs d'introduction de gaz chlorhydrique et de solution de chlorure d'aluminium et d'un système de soutirage de bouillie de cristaux par le fond, on introduit 500 g d'une solution aqueuse chlorhydrique à environ 40% en HCl.

Un débit d'alimentation de 40 g/h d'acide HCl gazeux est maintenu en permanence durant toute la cristallisation. La solution étant conservée à température ambiante, le titre en HCl se stabilise à 42%. On injecte alors la solution aqueuse à 30% de $AlCl_3$ précédente à un débit de 80 g/h, la vitesse de l'agitateur étant réglée à 100 tr/min. Des cristaux se forment et la suspension de cristaux s'épaissit. On en extrait régulièrement une partie par le fond afin de maintenir constant le niveau du liquide dans le cristallisoir ainsi que la viscosité de la suspension.

Après avoir coulé 2500 g de solution de $AlCl_3$ à 30%, l'alimentaiton est arrêtée. La suspension de cristaux est extraite du réacteur puis filtrée. Le gâteau de filtration est lavé avec une solution de HCl à 38%, puis essoré. On recueille des cristaux aciculaires dont la longueur moyenne est de l'ordre de 50 micromètres. Un échantillon représentatif de ces cristaux placé dans un creuset de platine est calciné à 1000°C pendant 3 h. On recueille de l'alumine dont on dose les impuretés par spectrographie d'émission. Les résultats suivants sont obtenus:

| Impuretés | Ca | Fe | Ga | Mg | Mn | Na | Si | Ti |
|---|---|---|---|---|---|---|---|---|
| Teneur en ppm | 40 | 15 | 3,3 | 2,7 | <0,5 | 90 | 25 | <3 |

En dépit d'une épuration très sensible du produit de départ, le niveau de pureté atteint ne permet pas d'utiliser ce produit dans la fabrication des céramiques translucides pour tubes de lampe à vapeur de sodium haute pression par exemple.

*Exemple 3:*

*Cristallisation du chlorure d'aluminium hexahydraté*

Dans un cristallisoir cylindro-conique selon la fig. 1 de 0,08 m de diamètre et de 0,5 m de hauteur, muni d'un agitateur tournant à 20 tr/min, on fait circuler un débit de 15 l/h d'eaux mères de cristallisation de $AlCl_3$, 6 $H_2O$ au moyen de la pompe 3. On alimente le cristallisoir avec une solution de chlorure d'aluminium à 30% à un débit de 300 g/h réparti d'une façon égale dans les conduits 6 et 6'. Par la tubulure 7 on injecte un débit de 80 g/h d'acide HCl gazeux mesuré au moyen d'un rotamètre. Le cristallisoir contient initialement une charge de cristaux de granulométrie très étalée préparée lors d'un essai précédent. La température dans l'appareil est maintenue à 60°C au moyen de l'échangeur 4', ce qui conduit à opérer avec des eaux mères de cristallisation saturées en HCl à cette température. La composition de celles-ci est de 33% en HCl et de 1% en $AlCl_3$.

Périodiquement ou d'une manière continue, des cristaux de $AlCl_3$, 6 $H_2O$ sont soutirés à la base du réacteur de manière à maintenir constante la charge en cristaux du cristallisoir. Les eaux mères excédentaires sont évacuées en parallèle sur la boucle de recirculation.

Les cristaux sont soutirés lorsque leur taille est jugée suffisante. Dans ces conditions de fonctionnement leur taille moyenne est d'environ 1,2 mm. Leur granulométrie est très resserrée et comprise entre 0,6 et 2 mm environ. A la sortie du cristallisoir, les cristaux de chlorure sont filtrés, lavés avec une solution de HCl à 33%. Une aliquote est alors prélevée et transformée en alumine comme dans l'exemple précédent.

L'analyse spectrographique donne alors les résultats suivants:

| Impuretés | Ca | Fe | Ga | Mg | Mn | Na | Si | Ti |
|---|---|---|---|---|---|---|---|---|
| Teneur en ppm | 20 | 5 | <2 | 2 | <0,5 | 45 | 13 | <3 |

Le niveau de pureté atteint par cette cristallisation permet d'envisager d'utiliser ces cristaux de $AlCl_3$, 6 $H_2O$ comme matière première pour la production d'alumines de haute pureté destinés aux applications spécifiques à cette classe de poudres.

*Exemple 4:*

*Préparation d'alumine à partir de chlorure d'aluminium hexahydraté (exemple comparatif non conforme à l'invention)*

Des cristaux de $AlCl_3$, 6 $H_2O$ préparés selon la technique décrite dans l'exemple 3 sont transformés en alumine.

Pour cela on dispose la poudre en couche de moyenne épaisseur (2 cm) dans des cassettes elles-mêmes placées dans un four à résistances électriques. L'enceinte est munie d'un système de ventilation efficace qui aspire l'air ambiant.

Le four est en régime permanent et sa température est de 800°C.

La cassette à température ambiante est introduite rapidement dans le four où elle est maintenue pendant 3 h.

Le produit recueilli à l'issue de la calcination est analysé par diffraction des rayons X. Il s'agit bien d'une alumine de transition de la variété gamma principalement. Son aire spécifique est de 109 m²g⁻¹. Malheureusement, elle contient encore 0,33% de chlore, ce qui est excessif.

### Exemple 5:

(Exemple comparatif, non conforme à l'invention)

Dans le même dispositif que dans l'exemple précédent, on calcine l'hexahydrate du chlorure d'aluminium pendant 3 h à une température portée cette fois à 900°C. La durée de l'opération est conservée, soit 3 h. Le produit recueilli est alors correctement déchlorhydraté puisque son taux de Cl résiduaire ne dépasse pas 460 ppm mais son aire spécifique est tombée à 80 m²g⁻¹. C'est un mélange d'alumines de transition.

### Exemple 6:

*Calcination en lit drainé discontinu*

Des cristaux de AlCl₃, 6 H₂O préparés en lit fluidisé selon la recette décrite dans l'exemple 3 sont disposés à l'intérieur d'un réacteur en quartz sur une grille de platine supportée par une pièce en céramique poreuse. Le tube en quartz est entouré de fibres céramiques en nappe suffisamment épaisse pour que la température de paroi ne dépasse pas 60°C même lorsque le produit est chauffé à 1000°C dans le tube. La charge en chlorure est de 425 g/dm² de section de réacteur.

La couche d'épaisseur uniforme de chlorure ainsi constituée est parcourue de haut en bas par un courant d'air chaud et humide à 5,8% H₂O en volume. Le débit d'air est de 1,75 Nm³/hx dm² de section. L'air est préchauffé par passage dans un caisson radiant muni de résistances électriques à une température telle qu'il pénètre dans la couche de cristaux à 800°C. Au bout de 1 h, le système est en équilibre et la charge est à 800°C. Le dispositif est maintenu en régime pendant 2 h dans ces conditions.

Pendant toute la durée de l'opération, soit 3 h, on suit la perte de charge dans le réacteur. Celle-ci demeure très faible et toujours inférieure à 10 mbar, le maximum étant atteint vers 300°C.

A l'issue de la durée choisie, l'alimentation en gaz est interrompue et on laisse la charge se refroidir. On recueille de la sorte 87,2 g d'alumine par dm² de section de réacteur.

L'analyse révèle qu'il s'agit d'alumine êta ne contenant pas plus de 900 ppm de chlore résiduaire et dont l'aire spécifique s'élève à 133 m²g⁻¹. Ce produit d'excellente pureté est apte, éventuellement après désagglomération, à toutes les utilisations des alumines de transition de haute pureté.

De plus, il se transforme particulièrement rapidement en corindon. Ainsi par chauffage à 1150°C pendant 2 h, on recueille une poudre constituée à 95% par de l'alumine alpha dont l'aire spécifique n'est plus que de 6 m²g⁻¹. Ce produit peut être mis en œuvre par frittage pour la préparation des céramiques techniques les plus fines.

### Exemple 7:

*Calcination en lit drainé continu*

On dispose d'un réacteur continu pour la pyrohydrolyse du chlorure d'aluminium hexahydraté. Il est constitué essentiellement de deux plaques verticales et parallèles en céramique poreuse distantes de 5 cm. Ces grilles sont maintenues en place latéralement par des murs en béton réfractaire lié au phosphate acide d'aluminium. Le volume défini par les 2 plaques poreuses et les 2 parois latérales pleines est rempli de cristaux de chlorure d'aluminium hexahydraté à grosse granulométrie obtenus par cristallisation en lit fluidisé. Ces cristaux sont animés d'un mouvement de glissement lent, à vitesse contrôlée et constituent en somme un lit coulant.

Les faces externes des parois poreuses sont reliées à des caissons étanches et entièrement calorifugés. Dans l'un d'eux, on introduit de l'air chaud et humide à un débit de 0,45 Nm³/hx dm² de surface de plaque poreuse.

De l'autre côté, on recueille les gaz humides chargés d'acide chlorhydrique qui sont dirigés vers une tour d'absorption.

Les gaz entrant contiennent 5% d'eau en volume. Le réacteur comporte un seul étage, c'est-à-dire que les gaz pénètrent dans la plaque poreuse «amont» partout à la même température. Cette température est constante et dans l'exemple choisi, elle est de 800°C. A l'intérieur du produit, il s'établit un gradient de température entre l'entrée et la sortie du fait de l'endothermicité de la réaction. Le temps de séjour total du produit dans le réacteur est de 1 h. La vitesse moyenne de descente du lit est de 1 cm/min. La température de 800°C est atteinte au bout de 20 min alors que les grains ont parcouru environ 20 cm.

Le produit qui sort en continu est analysé.

Il s'agit d'alumine êta dont la teneur en chlore résiduaire ne dépasse pas 150 ppm et dont l'air spécifique atteint 140 m²g⁻¹.

Les gaz d'exhaure ont une teneur en acide chlorhydrique de 48% par rapport au mélange HCl-eau. La solution recueillie est utilisable pour le lavage des cristaux de chlorure, la génération d'HCl gazeux pour la cristallisation et l'attaque de l'hydrate.

## Revendications

1. Procédé de séparation d'alumine de haute pureté à partir de solutions impures de chlorure d'aluminium, par cristallisation de chlorure d'aluminium hexahydraté en présence d'acide chlorhydrique, séparation par filtration-essorage des cristaux obtenus et leur lavage par HCl pur, suivi par une pyrohydrolyse des cristaux lavés, caractérisé en ce que le chlorure d'aluminium hexahydraté est cristallisé en cristaux de 400 à 4000 μm, et en ce que, après filtration-essorage et lavage, les cristaux sont soumis, en couche, à une pyrohydrolyse à une température comprise entre 700 et 1300°C, au cours de laquelle on force un gaz à traverser la couche solide de chlorure d'aluminium hexahydraté, de façon à extraire les produits gazeux de la réaction, sans mise en mouvement du solide par le gaz.

2. Procédé selon la revendication 1, caractérisé en ce que la cristallisation du chlorure d'aluminium hexahydraté est réalisée dans un lit fluidisé liquide solide.

3. Procédé selon l'une quelconque des revendications 1 ou 2, caractérisé en ce que la solution impure de chlorure d'aluminium contient de 8 à 33% en poids de chlorure d'aluminium.

4. Procédé selon l'une quelconque des revendications 1 à 3, caractérisé en ce que la cristallisation du chlorure d'aluminium hexahydraté est réalisée en continu, avec injection de la solution initiale impure de chlorure d'aluminium, et d'acide chlorhydrique gazeux dans une suspension agitée de cristaux de chlorure d'aluminium hexahydraté dans une solution épuisée contenant entre 0,5 et 15% en poids de chlorure d'aluminium.

5. Procédé selon l'une quelconque des revendications 1 à 4, caractérisé en ce que la concentration en solution de l'acide chlorhydrique utilisé au cours de l'étape de cristallisation est comprise entre 15 et 35% en poids.

6. Procédé selon l'une quelconque des revendications 1 à 5, caractérisé en ce que la cristallisation du chlorure d'aluminium hexahydraté est effectuée à une température comprise entre 50 et 75°C.

7. Procédé selon l'une quelconque des revendications 1 à 6, caractérisé en ce que dans l'étape de pyrohydrolyse les cristaux de chlorure d'aluminium hexahydraté sont disposés en couche uniforme sur un support poreux et sont traversés de haut en bas par le gaz, circulant à une vitesse supérieure à la vitesse minimale de fluidisation de la charge.

8. Procédé selon l'une quelconque des revendications 1 à 6, caractérisé en ce que dans l'étape de pyrohydrolyse les cristaux de chlorure d'aluminium hexahydraté sont disposés en sandwich entre deux supports poreux et sont traversés latéralement par le gaz.

9. Procédé selon l'une quelconque des revendications 1 à 6, caractérisé en ce que dans l'étape de pyrohydrolyse les cristaux de chlorure d'aluminium hexahydraté sont disposés en sandwich entre deux supports poreux et sont traversés de bas en haut par le gaz.

10. Procédé selon l'une quelconque des revendications 1 à 9, caractérisé en ce que l'étape de pyrohydrolyse est réalisée en discontinu, la couche de cristaux de chlorure d'aluminium hexahydraté étant immobile.

11. Procédé selon l'une quelconque des revendications 1 à 9, caractérisé en ce que l'étape de pyrohydrolyse est réalisée en continu, la couche de cristaux de chlorure d'aluminium hexahydraté étant alors animée d'un mouvement de glissement à vitesse contrôlée le long des parois du réacteur.

12. Procédé selon l'une quelconque des revendications 1 à 11, caractérisé en ce que les calories nécessaires à la pyrohydrolyse sont apportées par le gaz qui est forcé à travers la couche de cristaux.

13. Procédé selon l'une quelconque des revendications 1 à 12, caractérisé en ce que le gaz traversant la couche de chlorure d'aluminium hexahydraté est constitué par de l'air humide ou par des gaz provenant de la combustion d'un hydrocarbure.

14. Procédé selon l'une quelconque des revendications 1 à 13, caractérisé en ce que l'acide chlorhydrique formé au cours de la pyrohydrolyse du chlorure d'aluminium hexahydraté est récupéré dans une tour à absorption sous forme de solution aqueuse, qui est recyclée à l'étape de lavage des cristaux et/ou à l'étape de cristallisation, où elle sert à la génération d'acide chlorhydrique gazeux, et/ou éventuellement à la fabrication de la solution initiale de chlorure d'aluminium par attaque de trihydroxyde d'aluminium.

## Patentansprüche

1. Verfahren zur Abtrennung von Aluminiumoxid hoher Reinheit aus unreinen Aluminiumchloridlösungen durch Kristallisation von Aluminiumchloridhexahydrat in Gegenwart von Salzsäure, Abtrennung der erhaltenen Kristalle durch Filtration-Absaugung und deren Waschen mit reiner Salzsäure, worauf eine Pyrohydrolyse der gewaschenen Kristalle folgt, dadurch gekennzeichnet, dass das Aluminiumchloridhexahydrat zu Kristallen von 400 bis 400 µm kristallisiert wird und dass nach der Filtration-Absaugung und dem Waschen die Kristalle als Schicht einer Pyrohydrolyse bei einer Temperatur im Bereich von 700 bis 1300°C unterworfen werden, im Laufe deren man ein Gas die feste Aluminiumchlorid-Hexahydratschicht derart durchströmen lässt, dass die gasförmigen Produkte der Reaktion ohne Inbewegungsetzung des Feststoffmaterials durch das Gas abgezogen werden.

2. Verfahren nach Anspruch 1, dadurch gekennzeichnet, dass die Kristallisation des Aluminiumchloridhexahydrats in einer Flüssig-Fest-Wirbelschicht erfolgt.

3. Verfahren nach Anspruch 1 oder 2, dadurch gekennzeichnet, dass die unreine Aluminiumchloridlösung 8 bis 33 Gew.-% Aluminiumchlorid enthält.

4. Verfahren nach einem der Ansprüche 1 bis 3, dadurch gekennzeichnet, dass die Kristallisation des Aluminiumchlorid hexahydrats kontinuierlich mit Injektion der unreinen Aluminiumchloridausgangslösung und von gasförmiger Salzsäure in eine gerührte Suspension von Aluminiumchloridhexahydratkristallen in einer erschöpften, 0,5 bis 15 Gew.-% Aluminiumchlorid enthaltenden Lösung erfolgt.

5. Verfahren nach einem der Ansprüche 1 bis 4, dadurch gekennzeichnet, dass die Salzsäurekonzentration der im Lauf des Kristallisationsschritts verwendet Lösung im Bereich von 15 bis 35.-% liegt.

6. Verfahren nach einem der Ansprüche 1 bis 5, dadurch gekennzeichnet, dass die Kristallisation des Aluminiumchloridhexahydrats bei einer Temperatur im Bereich von 50 bis 75°C erfolgt.

7. Verfahren nach einem der Ansprüche 1 bis 6, dadurch gekennzeichnet, dass im Pyrohydrolyseschritt die Aluminiumchloridhexahydratkristalle in gleichmässiger Schicht auf einem porösen Träger angeordnet und von oben nach unten vom Gas durchströmt werden, das mit einer Geschwindigkeit über der minimalen Fluidisierungsgeschwindigkeit der Charge zirkuliert.

8. Verfahren nach einem der Ansprüche 1 bis 6, dadurch gekennzeichnet, dass im Pyrohydrolyseschritt die Aluminiumchloridhexahydratkristalle als Laminat zwischen zwei porösen Trägern angeordnet und seitlich vom Gas durchströmt werden.

9. Verfahren nach einem der Ansprüche 1 bis 6, dadurch gekennzeichnet, dass im Pyrohydrolyseschritt die Aluminiumchloridhexahydratkristalle als Laminat zwischen zwei porösen Trägern angeordnet und von unten nach oben vom Gas durchströmt werden.

10. Verfahren nach einem der Ansprüche 1 bis 9, dadurch gekennzeichnet, dass der Pyrohydrolyseschritt diskontinuierlich durchgeführt wird, wobei die Aluminiumchloridhexahydrat-Kristallschicht unbeweglich ist.

11. Verfahren nach einem der Ansprüche 1 bis 9, dadurch gekennzeichnet, dass der Pyrohydrolyseschritt kontinuierlich durchgeführt wird, wobei die Aluminiumchloridhexahydrat-Kristallschicht dann in eine Gleitbewegung mit gesteuerter Geschwindigkeit längs der Reaktionsgefässwände versetzt wird.

12. Verfahren nach einem der Ansprüche 1 bis 11, dadurch gekennzeichnet, dass die zur Pyrohydrolyse erforderliche Wärme durch das Gas zugeführt wird, das durch die Kristallschicht getrieben wird.

13. Verfahren nach einem der Ansprüche 1 bis 12, dadurch gekennzeichnet, dass das die Aluminiumchloridhexahydratschicht durchströmende Gas aus feuchter Luft oder aus von der Verbrennung eines Kohlenwasserstoffs stammenden Gasen besteht.

14. Verfahren nach einem der Ansprüche 1 bis 13, dadurch gekennzeichnet, dass die im Lauf der Pyrohydrolyse des Aluminiumchloridhexahydrats gebildete Salzsäure in einem Absorptionsturm in Form wässeriger Lösung erfasst wird, die zur Waschstufe der Kristalle und/oder zur Kristallisationsstufe, wo sie der Erzeugung gasförmiger Salzsäure dient, und/oder ggf. zur Herstellung der Aluminiumchloridausgangslösung durch Reaktion mit Aluminiumtrihydroxid rückgeführt wird.

### Claims

1. Process for separating high purity alumina from impure solutions of aluminium chloride by crystallisation of hexahydrated aluminium chloride in the presence of hydrochloric acid, separation by filtration-drying of the crystals obtained and washing thereof with pure HCl followed by pyrohydrolysis of the washed crystals, characterised in that the hexahydrated aluminium chloride is crystallised into crystals of from 400 to 4000 μm and in that, after filtration-drying and washing, the crystals are subjected, in a layer, to pyrohydrolysis at a temperature of between 700 and 1300°C, during which a gas is forced through the solid layer of hexahydrated aluminium chloride so as to extract the gaseous reaction products without the gas causing the solid to move.

2. Process according to Claim 1, characterised in that the hexahydrated aluminium chloride is crystallised in a liquid/solid fluidised bed.

3. Process according to one of Claims 1 or 2, characterised in that the impure aluminium chloride solution contains from 8 to 33% by weight of aluminium chloride.

4. Process according to any one of Claims 1 to 3, characterised in that the hexahydrated aluminium chloride is crystallised continuously with injection of the impure starting solution of aluminium chloride and of gaseous hydrochloric acid in a stirred suspension of hexahydrated aluminium chloride crystals in a spent solution containing between 0.5 and 15% by weight of aluminium chloride.

5. Process according to any one of Claims 1 to 4, characterised in that the concentration of hydrochloric acid solution used during the crystallisation stage is comprised between 15 and 35% by weight.

6. Process according to any one of Claims 1 to 5, characterised in that the hexahydrated aluminium chloride is crystallised at a temperature of between 50 and 75°C.

7. Process according to any one of Claims 1 to 6, characterised in that, in the pyrohydrolysis stage, the hexahydrated aluminium chloride crystals are arranged in a uniform layer on a porous support and are traversed from top to bottom by the gas circulating at a speed higher than the minimum speed of fluidisation of the charge.

8. Process according to any one of Claims 1 to 6, characterised in that, in the pyrohydrolysis stage, the crystals of hexahydrated aluminium chloride are arranged in a sandwich between two porous supports and are traversed laterally by the gas.

9. Process according to any one of Claims 1 to 6, characterised in that, in the pyrohydrolysis stage, the hexahydrated aluminium chloride crystals are arranged in a sandwich between two porous supports and are traversed from bottom to top by the gas.

10. Process according to any one of Claims 1 to 9, characterised in that the pyrohydrolysis stage is carried out discontinuously, the layer of hexahydrated aluminium chloride crystals being stationary.

11. Process according to any one of Claims 1 to 9, characterised in that the pyrohydrolysis stage is carried out continuously, the layer of hexahydrated aluminium chloride crystals thus being actuated with a sliding movement at a controlled speed along the walls of the reactor.

12. Process according to any one of Claims 1 to 11, characterised in that the calories required for pyrohydrolysis are provided by the gas which is forced through the layer of crystals.

13. Process according to any one of Claims 1 to 12, characterised in that the gas traversing the layer of hexahydrated aluminium chloride is constituted by humid air or by gases originating from the combustion of a hydrocarbon.

14. Process according to any one of Claims 1 to 13, characterised in that the hydrochloric acid formed during pyrohydrolysis of the hexahydrated aluminium chloride is recovered in an absorption tower in the form of an aqueous solution which is recycled in the crystal-washing stage and/or in the crystallisation stage, where it is used for generating gaseous hydrochloric acid and/or possibly for producing the starting aluminium solution by attack of aluminium trihydroxide.

FIG. 1

11

LIT DRAINÉ DISCONTINU

FIG.2

LIT DRAINÉ CONTINU

FIG.3